# EUROPEAN PATENT SPECIFICATION

(11) **EP 1 951 559 B1**
(45) Date of publication and mention of the grant of the patent: **05.10.2011**
(21) Application number: 05809993.8
(22) Date of filing: 23.11.2005
(51) Int. Cl.: B60R 21/231

(54) **AN AIR-BAG**
AIRBAG
AIRBAG

(43) Date of publication of application: 06.08.2008
(73) Proprietor: Autoliv Development AB, 447 83 Vårgårda (SE)
(72) Inventor: HELLOT, Laurent, F-76220 La Feuillie (FR); HAESAERT, Charles, F-76660 Fresnoy Folny (FR); BIVILLE, Franck, F-76780 La Hallotiere (FR)
(74) Representative: Beattie, Alex Thomas Stewart
(86) International application number: PCT/SE2005/001750
(87) International publication number: WO 2007/061340

(56) References cited:
- EP-A- 1 086 860
- EP-A1- 1 122 134
- EP-A2- 1 283 136
- WO-A-02/16175
- JP-A- 3 136 942
- JP-A- 6 211 094
- JP-A- 7 125 591
- JP-A- 2000 016 210
- US-A- 3 747 952
- US-A- 4 262 931
- US-A- 5 906 391
- US-A- 6 086 095

## Description

**THE PRESENT INVENTION** relates to an air-bag, and more particularly relates to an air-bag which is to form part of a safety arrangement to be installed in a motor vehicle to protect an occupant of the vehicle in the event of an accident situation.

A typical air-bag installed in a motor vehicle as such a safety arrangement will most likely have been designed to inflate in a particular manner so that the airbag moves, as it inflates, to a predetermined position within the vehicle, to protect an occupant of that vehicle. The air-bag might, in the case of a dashboard mounted air-bag, be inflated in the event that an accident occurs so that part of the air-bag, when fully inflated, is positioned between the dashboard and an occupant of the vehicle in order to minimise the chances of the occupant striking the dashboard.

Such an air-bag is for example known from the WO 0216175.

If the occupant is seated in a normal upright position there will be a substantial gap between the occupant and the dashboard into which part of the air-bag may move as the air-bag is inflated. When the occupant is seated in a normal position the air-bag will, in most cases, be able to be inflated fully before the occupant of the vehicle contacts the air-bag due to movement towards the air-bag. However, if the occupant is not seated in the normal position and is "out of position", for instance if the occupant is leaning forwardly, there may only be a small gap between the occupant and the dashboard. In the case where the occupant is out of position, the air-bag may contact the occupant before it is fully inflated and the air-bag may, as a result, exert a large force on the occupant as the air-bag expands, and this large force may itself cause injury to the occupant. This is clearly disadvantageous.

It has been proposed previously to modify the design of air-bags to incorporate shape controlling devices, such as deflectors, tethers or tear seams, to control the shape of the air-bag as it is inflated in order to minimise the chances of the air-bag exerting a large force on an out-of-position occupant. These devices for controlling the shape of the air-bag are effective in minimising injury to an out-of-position occupant, but they can be expensive to implement. In most cases, the air-bag and the shape controlling device will need to be completely redesigned to correspond to the characteristics of a particular motor vehicle. It is particularly expensive to completely redesign an air-bag for each new design of vehicle which is produced by the automotive industry and there is thus a need for a design of air-bag which minimises this expense.

An air-bag for use as part of a safety arrangement to be installed in a motor vehicle, the air-bag incorporating a first portion and at least a second portion, said portions together defining an inflatable chamber, wherein one end of the first portion defines a relatively narrow throat and the other end of the first portion defines a relatively wide throat, at least part of the first portion extending between said throats being longer than an opposing side of the first portion, characterised in that the relatively wide throat is attached to the second portion in fluid communication therewith, the first portion being configured such that, upon inflation of the air-bag, the wide throat adopts a position in which the distance between part of the wide throat and the narrow throat is greater than the distance between an opposing part of the wide throat and the narrow throat, so that the first portion moves the second portion to a predetermined position, wherein the second portion is formed from a single sheet that is joined along two of its opposing edges to substantially form an open ended cylinder, and wherein one end of the second portion is attached to the relatively wide throat of the first portion.

Preferably the first portion is formed from a single sheet having a first region, a second region, and a fold line lying between the first and second regions, the sheet being folded along the fold line so that the first region and the second region are at least partly super-imposed on one another, with the end of the said regions defining the said throats.

Advantageously the said sheet of the second portion is substantially rectangular.

In one embodiment the second portion incorporates at least one tear seam which is oriented on the second portion so as to be substantially parallel to the said edges.

In another embodiment the air-bag further incorporates an extension portion which is formed from a single sheet which is joined along two of its edges to substantially form an open ended cylinder, one end of the extension portion being attached to the relatively wide throat of the first portion and the other end of the extension portion being attached to the said second portion.

Preferably the said sheet of the extension portion is substantially rectangular.

Conveniently the extension portion incorporates at least one tear seam which is oriented so as to be substantially perpendicular to the said edges.

Advantageously the air-bag incorporates a third portion which is formed from a single sheet, the third portion being attached to one end of the second portion to close one of the open ends of the second portion.

Preferably the said sheet of the third portion is substantially circular.

In order that the invention may be more readily understood, and so that further features thereof may be appreciated, embodiments of the invention will now be described, by way of example, with reference to the accompanying drawings in which:
FIGURE 1 is a diagrammatic view of an air-bag in accordance with the preferred embodiment of the invention, forming part of a safety arrangement installed in a motor vehicle, with the air-bag shown in an inflated condition,
FIGURE 2 is a diagrammatic plan view of a first portion of the air-bag of Figure 1, with the first portion shown in an unfolded condition,
FIGURE 3 is a diagrammatic plan view of the first portion of the air-bag of Figure 1 in the folded condition,
FIGURE 4 is a diagrammatic plan view of a second portion of the air-bag of Figure 1, with the second portion in an unfolded condition,
FIGURE 5 is a diagrammatic plan view of a third portion of the air-bag of Figure 1, with the third portion in an unfolded condition,
FIGURE 6 is a diagrammatic view of an air-bag in accordance with an alternative embodiment of the invention, and
FIGURE 7 is a diagrammatic view of an air-bag in accordance with a further embodiment of the invention.

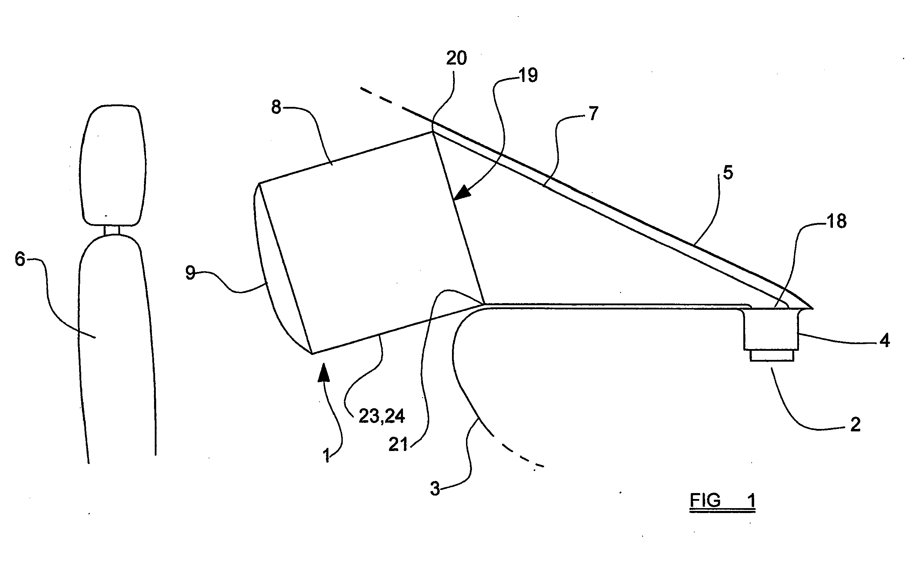

Referring initially to Figure 1 of the accompanying drawings, an air-bag 1 in accordance with a preferred embodiment of the invention forms part of a safety arrangement 2 which is mounted within a dashboard 3 of a motor vehicle. An air-bag module 4 is mounted beneath the surface of the dashboard 3 at the front of the dashboard 3, adjacent the lower edge of a windscreen 5 of the vehicle.

During normal vehicle operation the air-bag 1 is folded within the air-bag module 4. In the event that an accident situation occurs, the air-bag module 4 is actuated and the air-bag 1 is inflated out from the air-bag module 4. The dashboard 3 and the windscreen 5 deflect the air-bag 1 towards an occupant seated on a seat 6 in the vehicle, until the air-bag 1 is fully inflated, as seen in Figure 1. When the air-bag is fully inflated, part of the air-bag 1 extends between an occupant seated on the seat 6 and the dashboard 3.

The air-bag 1 will now be described in detail, with reference to Figures 1 to 5 of the accompanying drawings.

The air-bag 1 comprises a first portion 7, a second portion 8 and (optionally) a third portion 9.

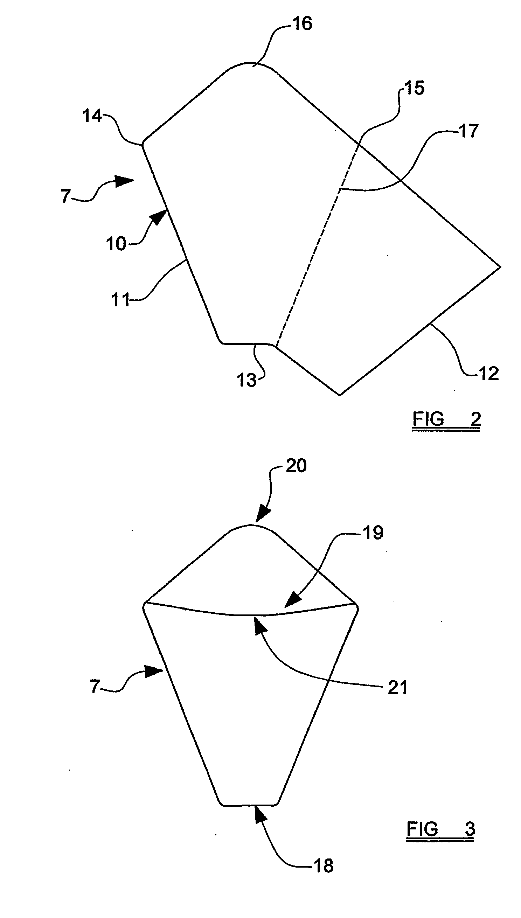

The first portion 7 is constructed from a single sheet of material 10 as shown most clearly in Figure 2. During an initial stage of the construction of the air-bag 1, the sheet of material 10 is cut into a shape which has a first region 11 which is to form an upper side of the first portion 7, and a second region 12 which is to form a lower side of the first portion 7.

The first region 11 is of generally kite shape, with a relatively short lower edge 13 from which the material (preferably fabric material) forming the first region 11 tapers upwardly and outwardly in a symmetrical manner about an axis defined perpendicularly through the midpoint of the lower edge 13. The width of the first region 11 tapers outwardly as the distance from the lower edge 13 increases, until meeting corner points 14,15 after which the width of the first region 11 tapers inwardly. The width of the first region 11 tapers inwardly after the corner points 14,15 to a rounded top point 16.

The second region 12 of the first portion 7 is integral with the first region 11 and protrudes from the first region 11 along an axis defined between one of the corner points 15 and one end of the relatively short lower edge 13. The second region 12 is dimensioned so as to be of a similar shape to the lower part of the first region 11 as defined between the coener points 14,15 and the lower edge 13.

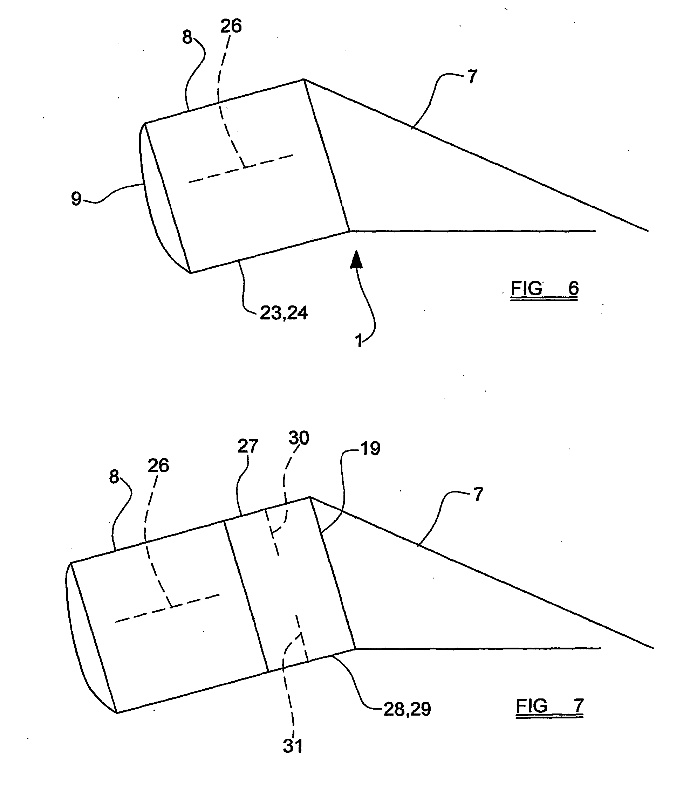

The first portion 7 is provided with a fold line 17 along the axis defined between one of the corner points 15 and one end of the lower edge 13 which is also the join between the first region 11 and the second region 12. The sheet forming the first portion 7 is folded along the fold line 17 so that the second region 12 and the first region 11 are superimposed on one another, as seen in Figure 7. The first region 11 and the second region 12 are then joined (preferably by stitching) to one another along the outwardly tapering edge opposite the fold line 17, so as to form a generally elongate conduit, open at both ends.

One end of the first portion 7, constituted partly by the lower edge 13, defines a relatively narrow throat 18. The other end of the first portion 7, constituted partly by the part of the first region 11 between the corner points 14,15 defines a relatively wide throat 19. The relatively narrow throat 18 constitutes an inlet to the first portion 7 which is connected to an inflator within the air-bag module 4. The relatively wide throat 19 forms an open end which will be connected to one or more further portions of the air-bag 1.

An upper part 20 of the relatively wide throat 19 is positioned at a greater distance from the relatively narrow throat 18 than an opposing lower part 21 of the relatively wide throat 19. The purpose of this greater distance will become clear from the description below.

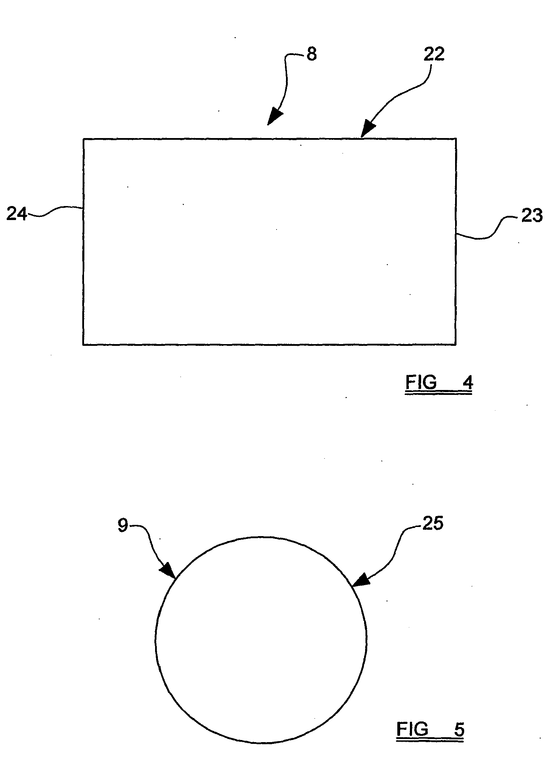

The second portion 8 of the air-bag 1 is formed from a generally rectangular sheet 22, as seen in Figure 4. The second portion 8 is assembled by joining (preferably by stitching) two opposing side edges 23,24 of the sheet 22 so that the second portion 8 forms an open ended cylinder. One end of the second portion 8 is then attached (preferably by stitching) to the relatively wide throat 19 of the first portion 7, as shown in Figure 1, so as to connect the first and second portions 7,8 of the air-bag 1 to one another in fluid communication.

The third portion 9 of the air-bag 1 is formed from a single, generally circular, sheet 25 as seen in Figure 5. The peripheral edge of the generally circular sheet 25 is attached (preferably by stitching) to the second portion 8 to form a generally gas-tight seal which closes the end of the second portion 8.

When the safety arrangement 2 is in an unactuated condition, during normal vehicle operation, the air-bag 1 is folded and stored within the housing of the air-bag module 4. In the event that an accident situation occurs, the air-bag module 4 is actuated and the inflator generates gas which is injected into the air-bag 1 via the relatively narrow throat 18.

The gas injected into the air-bag 1 inflates the air-bag 1, causing the air-bag 1 to expand and unfold. As the air-bag 1 expands, the air-bag 1 exerts a force on the upper surface of the air-bag module 4, which causes the upper surface of the air-bag module 4 to open to allow the air-bag 1 to inflate outwardly from the air-bag module 4 and into the cabin of the vehicle.

The first portion 7 of the air-bag 1 is the first portion of the air-bag 1 into which gas is injected and thus the first portion 7 inflates slightly before the second and third portions 8,9. The first portion 7 inflates to lie over the upper side of the dashboard 3, as seen in Figure 1. The inflation of the first portion 7 of the air-bag 1 substantially before the inflation of the second and third portions 8,9 means that the initial stage of inflation of the air-bag 1, when the expansion of the air-bag 1 is most rapid and aggressive, occurs over the dashboard 3 and not close to an occupant seated on the seat 6.

The second and third portions 8,9 of the air-bag 1, which are the portions of the air-bag which are to contact the occupant, inflate at a later stage during the inflation process and thus inflate less rapidly and aggressively than the first portion 7. The less aggressive inflation of the second and third portions 8,9 is less likely to exert a severe force on an out-of-position occupant, thus minimising the chances of injury to the occupant.

When the first portion 7 is fully inflated, the upper part 20 of the relatively wide throat 19 adopts a position in which the distance between the upper part 20 of the wide throat 19 and the narrow throat 18 is greater than the distance between the opposing lower part 21 of the wide throat 19 and the narrow throat 18. The difference in the distance between the upper part 20 and the lower part of the first portion 7 and the narrow throat 18 causes the relatively wide throat 19 to be angled rearwardly, towards the seat 6, as illustrated in Figure 1. The angle of the relatively wide throat 19 directs the second and third portions 8,9 slightly downwardly, towards the torso of an occupant seated on the seat 6. This downward angle helps to direct the inflation of the second and third portions 8,9 of the air-bag 1 towards the torso of an occupant of the seat 6, and away from the head of the occupant, thus minimising the chances of the occupant being injured by the second and third portions 8,9 exerting an excessive force on the occupant's head.

As the first portion 7 becomes fully inflated, it moves the second portion 8 and the third portion 9 to a predetermined position in which the second and third portions 8,9 are closer to an occupant seated on the seat 6. Gas subsequently continues to be injected into the air-bag 1 until all portions 7,8,9 of the air-bag 1 are fully inflated, as seen in Figure 1.

It is to be appreciated that the first portion 7 of the air-bag 1, as described above, can form the first portion of a plurality of different types of air-bag designed to be installed in different types of vehicle without the first portion needing to be redesigned for each such vehicle. The second or third portions 8,9 can be modified depending upon which vehicle the air-bag 1 is intended to be installed in, whilst always using the same configuration of the first portion 7. The removal of the need to redesign the first portion helps to minimise the expense of producing an air-bag for a new design of vehicle, as it is only further portions of the air-bag which need to be designed to suit the new design of vehicle.

Referring now to Figure 6, an air-bag 1 in accordance with an alternative embodiment of the invention is substantially identical in many respects to the air-bag 1 of the preferred embodiment described above. The same reference numerals will be used for parts of the air-bag 1 of this alternative embodiment which correspond to equivalent parts of the air-bag 1 of the embodiment described above.

The first and third portions 7,9 of the air-bag 1 of this alternative embodiment are identical to the first and third portions 7,9 of the air-bag of the preferred embodiment described above. The second portion 8 of the air-bag of this alternative embodiment is substantially identical to the preferred embodiment described above, but the second portion 8 of the air-bag 1 of this alternative embodiment is provided with a horizontal tear seam 26. The horizontal tear seam 26 is positioned along a central axis of the second portion 7 and orientated so as to be substantially parallel to the edges 23,24 of the second portion 8. The horizontal tear seam 26 is formed from stitching which is designed to restrict the initial inflation of the second portion 8.

The stitching of the horizontal tear seam 26 retains the second portion 8 in a partly folded condition until the pressure of gas within the air-bag 1 has reached a predetermined level. This predetermined level is reached when the first and third portions 7,9 of the air-bag 1 are otherwise fully inflated. When the pressure of gas reaches the predetermined level the gas causes the air-bag to expand and so exerts a force on the stitching of the horizontal tear seam 26 which ruptures the stitching, allowing the second portion 8 to become fully inflated.

The tear seam 26 ensures that the first and third portions 7,9 become fully inflated to move the second portion 8 quickly to a desired position in front of an occupant of the seat 6 before the second portion 8 becomes fully inflated. The tear seam 26 thus allows quick coupling of the air-bag 1 to an occupant of the seat 6 during an accident situation so that the air-bag 1 may be in a correct position to become fully inflated to protect an occupant of the seat 6.

Referring now to Figure 7, a further embodiment of the invention is similar to the alternative embodiment described above, but this further embodiment incorporates an extension portion 27. The extension portion 27 is formed of a generally rectangular sheet which is joined along two opposing edges 28,29, in a similar manner to the second portion 8, so as to be of a cylindrical shape with open ends. One end of the extension portion 27 is attached (preferably by stitching) to the relatively wide throat 19 of the first portion 7 and the other end of the extension portion 27 (preferably by stitching) is attached to one end of the second portion 8. The extension portion 27 is thus positioned between the first portion 7 and the second portion 8 of the air-bag 1.

The extension portion 27 is provided with two vertical tear seams 30,31, each formed of stitching which is orientated so as to be generally perpendicular to the edges 28,29 of the extension portion 27. One tear seam 30 extends downwardly from the upper side of the extension portion 27 and the other tear seam 31 extends upwardly from the lower side of the extension portion 27. Behind each tear seam is a respective fold of air-bag material which is tucked inwardly of the rest of the extension portion.

When the air-bag 1 of this further embodiment is in an uninflated form, the above-mentioned folds of the extension portion 27 are held in their tucked-in configurations by the tear seams 30,31, thereby limiting the extent to which the extension portion will inflate upon actuation of the inflator. When the air-bag 1 is inflated the tear seams 30,31 thus restrict the initial expansion of the extension portion 27. The tear seams 30,31 remain intact and restrict the expansion of the extension portion 27 until the pressure of gas within the air-bag 1 reaches a predetermined level. When the pressure of gas within the air-bag 1 reaches the predetermined level, the stitching of tear seams 30,31 ruptures so that the tear seams 30,31 no longer restrict the expansion of the extension portion 27, allowing the extension portion 27 to become fully inflated by the unfolding of the folds behind the tear seams 30,31. Due to the orientation of the tear seams and the folds of material behind them, this therefore allows the extension portion to advance towards the seat occupant, thereby moving the second portion 8 into an appropriate position to provide protection to the occupant.

The predetermined level at which the stitching of the tear seams 30,31 ruptures is selected to occur at a late stage during the inflation of the air-bag 1, after the other portions 7,8,9 of the air-bag 1 have been fully inflated.

The extension portion 27 is thus the final portion of the air-bag 1 to become fully inflated. If the air-bag 1 is inflated in front of an occupant of the seat 6 who is sitting in a normal upright position then there will be space in front of the occupant in which the air-bag 1 may inflate, and thus the stitching of the tear seams 30,31 ruptures to allow the extension portion 27 to become fully inflated in the manner described above. However, if the occupant is sitting out-of-position, for instance close to the dashboard 3, there may be little space between the occupant and the dashboard 3 in which the air-bag 1 can inflate. In this situation, the air-bag 1 will contact the occupant before the pressure of gas within the air-bag 1 has reached the predetermined level to rupture the stitching of the tear seams 30,31, and thus the stitching of the tear seams 30,31 will help to restrain the extension portion 27 from further inflation, thereby resulting in a reduced force being exerted by the air-bag 1 on the out-of-position occupant, minimising injury to the occupant.

Whilst the above-mentioned embodiment of figure 7 has been described with reference to two tear-seams, it should be appreciated that a further possible variant could be provided with a single tear-seam running around substantially the entire periphery of the extension portion, so as to lie be generally perpendicular to the edges 28,29 of the extension portion 27. In such an arrangement a single peripheral fold of material would be tucked inwardly of the extension portion, behind the single seam.

It is to be understood that other embodiments of the invention the air-bag 1 may be provided with a larger or smaller number of further portions which are attached to the first portion 7, with the portions incorporating any number of tear seams.

In yet further embodiments the air-bag 1 may be provided with deflectors and/or tethers and/or other means to restrict the shape of the air-bag as it is inflated.

When used in this specification and claims, the terms "comprises" and "comprising" and variations thereof mean that the specified features, steps or integers are included. The terms are not to be interpreted to exclude the presence of other features, steps or components.

The invention is defined by the appended claims.

## Claims

1. An air-bag (1) for use as part of a safety arrangement (2) to be installed in a motor vehicle, the air-bag (1) incorporating a first portion (7) and at least a second portion (8), said portions (7,8) together defining an inflatable chamber, wherein one end of the first portion (7) defines a relatively narrow throat (18) and the other end of the first portion (7) defines a relatively wide throat (19), at least part of the first portion (7) extending between said throats (18,19) being longer than an opposing side of the first portion (7), wherein the relatively wide throat (19) is attached to the second portion (8) in fluid communication therewith, the first portion (7) being configured such that, upon inflation of the air-bag (1), the wide throat (19) adopts a position in which the distance between part (20) of the wide throat (19) and the narrow throat (18) is greater than the distance between an opposing part of the wide throat (19) and the narrow throat (18), so that the first portion (7) moves the second portion (8) to a predetermined position, **characterized in that** the second portion (8) is formed from a single sheet (22) that is joined along two of its opposing edges (23,24) to substantially form an open ended cylinder, and wherein one end of the second portion (8) is attached to the relatively wide throat (19) of the first portion (7).

2. An air-bag according to claim 1 , wherein the first portion (7) is formed from a single sheet (10) having a first region (11), a second region (12), and a fold line (17) lying between the first and second regions (11,12), the sheet (10) being folded along the fold line (17) so that the first region (11) and the second region (12) are at least partly super-imposed on one another, with the ends of the said regions (11 ,12) defining the said throats (18,19).

3. An air-bag according to claim 1 or 2, wherein the said sheet (22) of the second portion (8) is substantially rectangular.

4. An air-bag according to any preceding claim, wherein the second portion (8) incorporates at least one tear seam (26) which is orientated on the second portion (8) so as to be substantially parallel to the said edges (23,24).

5. An air-bag according to any preceding claim, wherein the air- bag (1) further incorporates an extension portion (27) which is formed from a single sheet which is joined along two of its edges (28,29) to substantially form an open ended cylinder, one end of the extension portion (27) being attached to the relatively wide throat (19) of the first portion (7) and the other end of the extension portion (27) being attached to the said second portion (8).

6. An air-bag according to claim 5, wherein the said sheet of the extension portion (27) is substantially rectangular.

7. An air-bag according to claim 5 or 6, wherein the extension portion (27) incorporates at least one tear seam (30,31) which is orientated so as to be substantially perpendicular to the said edges (28,29).

8. An air-bag according to any preceding claim, wherein the air- bag (1) incorporates a third portion (9) which is formed from a single sheet (25), the third portion (9) being attached to one end of the second portion (8) to close one of the open ends of the second portion (8).

9. An air-bag according to claim 8, wherein the said sheet (25) of the third portion (9) is substantially circular.

10. An air-bag module to be installed in a motor vehicle, the air-bag module incorporating the air-bag of any one of Claims 1 to 8.

## Patentansprüche

1. Airbag (1) zur Verwendung als Teil einer Sicherheitsanordnung (2) zum Einbau in ein Kraftfahrzeug, wobei der Airbag (1) einen ersten Abschnitt (7) und mindestens einen zweiten Abschnitt (8) beinhaltet, wobei die Abschnitte (7, 8) zusammen eine aufblasbare Kammer definieren, wobei ein Ende des ersten Abschnitts (7) ein relativ enges Halsstück (18) definiert und das andere Ende des ersten Abschnitts (7) ein relativ weites Halsstück (19) definiert, wobei mindestens ein Teil des ersten Abschnitts (7), der zwischen den Halsstücken (18, 19) verläuft, länger als eine gegenüberliegende Seite des ersten Abschnitts (7) ist, **dadurch gekennzeichnet, dass** das relativ weite Halsstück (19) am zweiten Abschnitt (8) in Fluidverbindung mit diesem angebracht ist, wobei der erste Abschnitt (7) derart gestaltet ist, dass das weite Halsstück (19) nach dem Aufblasen des Airbag (1) ein Position einnimmt, in welcher der Abstand zwischen Teil (20) des weiten Halsstücks (19) und dem engen Halsstück (18) größer als der Abstand zwischen einem gegenüberliegenden Teil des weiten Halsstücks (19) und dem engen Halsstück (18) ist, so dass der erste Abschnitt (7) den zweiten Abschnitt (8) zu einer vorher festgelegten Position bewegt, wobei der zweite Abschnitt (8) aus einer einzelnen Bahn (22) gebildet ist, die entlang zwei ihrer gegenüberliegender Enden (23, 24) verbunden ist, um einen Zylinder mit offenem Ende zu bilden, und wobei ein Ende des zweiten Abschnitts (8) am relativ weiten Halsstück (19) des ersten Abschnitts (7) angebracht ist.

2. Airbag nach Anspruch 1, wobei der erste Abschnitt (7) aus einer einzelnen Bahn (10) mit einem ersten Bereich (11), einen zweiten Bereich (12) und einer Falzlinie (17) gebildet ist, die zwischen dem ersten und dem zweiten Bereich (11, 12) liegt, wobei die Bahn (10) entlang der Falzlinie (17) derart gefaltet ist, dass der erste Bereich (11) und der zweite Bereich (12) einander mindestens teilweise überlagern, wobei die Enden der Bereiche (11, 12) die Halsstücke (18, 19) definieren.

3. Airbag nach Anspruch 1 oder 2, wobei die Bahn (22) des zweiten Abschnitts (8) im Wesentlichen rechteckig ist.

4. Airbag nach einem der vorhergehenden Ansprüche, wobei der zweite Abschnitt (8) mindestens eine Reißnaht (26) beinhaltet, die derart am zweiten Abschnitt (8) ausgerichtet ist, dass sie im Wesentlichen parallel zu den Rändern (23, 24) liegt.

5. Airbag nach einem der vorhergehenden Ansprüche, wobei der Airbag (1) ferner einen Verlängerungsabschnitt (27) beinhaltet, der aus einer einzelnen Bahn gebildet ist, die entlang zwei ihrer Ränder (28, 29) verbunden ist, um im Wesentlichen einen Zylinder mit offenem Ende zu bilden, wobei ein Ende des Verlängerungsabschnitts (27) am relativ weiten Halsstück (19) des ersten Abschnitts (7) und das andere Ende des Verlängerungsabschnitts (27) am zweiten Abschnitt (8) angebracht ist.

6. Airbag nach Anspruch 5, wobei die Bahn des Verlängerungsabschnitts (27) im Wesentlichen rechteckig ist.

7. Airbag nach Anspruch 5 oder 6, wobei der Verlängerungsabschnitt (27) mindestens eine Reißnaht (30, 31) beinhaltet, die derart ausgerichtet ist, dass sie im Wesentlichen senkrecht zu den Rändern (28, 29) liegt.

8. Airbag nach einem der vorhergehenden Ansprüche, wobei der Airbag (1) einen dritten Abschnitt (9) beinhaltet, der aus einer einzelnen Bahn (25) gebildet ist, wobei der dritte Abschnitt (9) an einem Ende des zweiten Abschnitts (8) angebracht ist, um eines der offenen Enden des zweiten Abschnitts (8) zu schließen.

9. Airbag nach Anspruch 8, wobei die Bahn (25) des dritten Abschnitts (9) im Wesentlichen kreisrund ist.

10. Airbagmodul zum Einbau in ein Kraftfahrzeug, wobei das Airbagmodul den Airbag nach einem der Ansprüche 1 bis 8 beinhaltet.

## Revendications

1. Un airbag (1) destiné à être utilisé dans le cadre d'un arrangement de sécurité (2) devant être installé dans un véhicule à moteur, l'airbag (1) comportant une première partie (7) et au moins une deuxième partie (8), lesdites parties (7, 8) définissant ensemble une chambre gonflable, dans lequel une extrémité de la première partie (7) définit une gorge relativement étroite (18) et l'autre extrémité de la première partie (7) définit une gorge relativement large (19), au moins une partie de la première partie (7) qui se trouve entre les gorges (18, 19) étant plus longue qu'un côté opposé de la première partie (7), dans lequel la gorge relativement large (19) est fixée à la deuxième partie (8) en communication fluide avec elle, la première partie (7) étant configurée de manière telle que, une fois l'airbag gonflé (1), la gorge large (19) adopte une position dans laquelle la distance entre la partie (20) de la gorge large (19) et la gorge étroite (18) est supérieure à la distance entre une partie opposée de la gorge large (19) et la gorge étroite (18), de manière telle que la première partie (7) déplace la deuxième partie (8) à un emplacement prédéterminé, **se caractérisant par le fait que** la deuxième partie (8) est formée d'une seule feuille (22) jointe sur deux de ses bords opposés (23, 24) de façon à former dans l'ensemble un cylindre ouvert, et dans lequel une extrémité de la deuxième partie (8) est fixée à la gorge relativement large (19) de la première partie (7).

2. Un airbag selon la revendication 1, dans lequel la première partie (7) est formée dans une seule feuille (10) ayant une première région (11), une deuxième région (12) et une ligne de pliure (17) ente les première et deuxième régions (11, 12), la feuille (10) étant pliée le long de la ligne de pliure (17) de façon à ce que la première région (11) et la deuxième région (12) soient au moins en partie superposées l'une sur l'autre, les extrémités des régions en question (11, 12) définissant lesdites gorges (18, 19).

3. Un airbag selon la revendication 1 ou 2, dans lequel la feuille (22) de la deuxième partie (8) est pour l'essentiel rectangulaire.

4. Un airbag selon n'importe laquelle des revendications précédentes, dans lequel la deuxième partie (8) intègre au moins une couture de déchirure (26) orientée sur la deuxième partie (8) de façon à être pour l'essentiel parallèle auxdits bords (23, 24).

5. Un airbag selon n'importe laquelle des revendications précédentes, dans lequel l'airbag (1) comprend également une partie extension (27) formée dans une seule feuille jointe sur deux de ses bords (28, 29) de façon à former dans l'ensemble un cylindre ouvert, une extrémité de la partie extension (27) étant fixée à la gorge relativement large (19) de la première partie (7) et l'autre extrémité de la partie extension (27) étant fixée à la deuxième partie (8).

6. Un airbag selon la revendication 5, dans lequel la feuille de la partie extension (27) est pour l'essentiel rectangulaire.

7. Un airbag selon la revendication 5 ou 6, dans lequel la partie extension (27) comporte au moins une couture de déchirure (30, 31) orientée de façon à être pour l'essentiel perpendiculaire aux bords (28, 29).

8. Un airbag selon n'importe laquelle des revendications précédentes, dans lequel l'airbag (1) comporte une troisième partie (9) formée dans une seule feuille (25), la troisième partie (9) étant fixée à une extrémité de la deuxième partie (8) de façon à fermer une des extrémités ouvertes de la deuxième partie (8).

9. Un airbag selon la revendication 8, dans lequel la feuille (25) de la troisième partie (9) est pour l'essentiel circulaire.

10. Un module d'airbag destiné à être installé dans un véhicule à moteur, le module d'airbag comportant l'airbag de n'importe laquelle des revendications 1 à 8.
